# EUROPÄISCHE PATENTSCHRIFT

(11) **EP 3 019 759 B1**
(45) Veröffentlichungstag und Bekanntmachung des Hinweises auf die Patenterteilung: **19.09.2018**
(21) Anmeldenummer: 14734106.9
(22) Anmeldetag: 25.06.2014
(51) Int. Cl.: F16B 25/00

(54) **HOLZSCHRAUBE MIT SICH VORDERSEITIG VERJÜNGENDEN ZWISCHENGEWINDEABSCHNITTEN**
WOOD SCREW WITH INTERMEDIATE THREAD SECTIONS TAPERING TO THE FRONT
VIS À BOIS PRÉSENTANT DES SEGMENTS INTER-FILETS DÉCROISSANT VERS L'AVANT

(30) Priorität: 08.07.2013 DE 102013213338
(43) Veröffentlichungstag der Anmeldung: 18.05.2016
(73) Patentinhaber: Adolf Würth GmbH & Co. KG, 74653 Künzelsau (DE); Würth International AG, 7000 Chur (CH)
(72) Erfinder: ECKERT, Rainer, 97990 Weikersheim (DE); WUNDERLICH, Andreas, 74635 Kupferzell (DE)
(74) Vertreter: Dilg, Haeusler, Schindelmann Patentanwaltsgesellschaft mbH
(86) Internationale Anmeldenummer: PCT/EP2014/063399
(87) Internationale Veröffentlichungsnummer: WO 2015/003906

(56) Entgegenhaltungen:
- EP-A1- 0 012 441
- EP-A1- 0 589 399
- DE-U1- 20 210 464
- JP-A- 2003 042 121
- US-A- 74 489

## Beschreibung

Die Erfindung betrifft eine Holzschraube, ein Verfahren zum Einbringen einer Holzschraube in einen Holzuntergrund, ein Verfahren zum Herstellen einer Holzschraube und eine Verwendung.

Eine Schraube ist ein Bolzen, der einen Antrieb aufweisen kann, wobei der Bolzen außen mit einem Gewinde versehen ist. Bei Schrauben mit Kopf dient die Ringfläche unter dem Kopf als Anschlag gegen das mit ihm zu befestigende Teil. DE 27 54 870 A1 offenbart eine selbstfurchende Schraube einer Art, die in Spanplatten guten Halt hat. Eine solche Schraube hat ein selbstfurchendes Gewinde, wobei zwischen zwei Gewindegängen eine Einschnürung gebildet ist. In die Einschnürung oder Vertiefung kann Material wandern, das von den Gewindegängen verdrängt wird, wodurch die Tragkraft erhöht werden soll. Der Gewindeabschnitt ist zwischen einem Kopf und einem Ende angeordnet, das eine Bohrspitze haben kann. Eine Schraube mit Bohrspitze kann dazu verwendet werden, in Bleche Löcher zu bohren, wobei nach dem Durchtreten der Bohrspitze die Schraube direkt in das Bohrloch eingedreht wird.

DE 10 2006 020 630 A1 offenbart eine Schraube zur Befestigung eines Kunststofffensterrahmens an einer Fensterlaibung aus Holz. Die Schraube hat einen Schraubenkopf und eine Schraubenspitze mit einer Schneidkerbe, wobei ein Schraubengewindebereich mit einem Grobgewinde zwischen den Schraubenkopf und der Schraubenspitze vorgesehen ist.

DE 202 10 464 U1 offenbart eine Schraube, insbesondere zur Anwendung mit Holz, mit einem Schaft, der mit einem Außengewinde versehen ist, wobei ein jeweiliges Gewindetal zwischen zwei Gewindebergen bogenförmig ausgebildet ist. Das Gewindetal kann mit Fasen zwischen Gewindebergen gebildet sein. Durch die so geformten Gewindetäler sollen das Drehmoment und die Biegbarkeit der Schraube erhöht werden und ein Bruch der Schraube vermieden werden.

CH 7671 A offenbart eine Holzschraube mit einem Gewinde aus Gewindegängen, die aus einer rückseitigen konkaven Begrenzungslinie und einer vorderseitigen konkaven Begrenzungslinie gebildet sind. Diese Gewindegänge sind zwischen einem Kopf und einem verjüngten, spitz auslaufenden Ende angeordnet.

EP 0 243 526 A1 offenbart eine Einschlagschraube mit einem Kopf und einem mit Gewindestegen versehenem Schaftabschnitt. Ein Ende der Einschlagschraube ist abgeflacht. Zwischen den Windungen des Gewindesteges ist jeweils eine im Wesentlichen zylindrische Schaftwandfläche vorgesehen. Zum Setzen der Einschlagschraube werden in einen Blendrahmen bzw. Flügelrahmen maschinell vorgefertigte Aufnahmebohrungen für die Einschlagschraube vorgesehen.

Aus EP 0,589,398 B1 bzw. DE 10 2010 028 344 A1 ist für einen Untergrund aus Kunststoff oder ein Leichtmetall bekannt, eine Schraube mit einem Gewinde in den Untergrund einzudrehen, wobei zwischen den Gewindegängen nichtzylindrische Kernabschnitte angeordnet sind, die sich in Richtung Schraubenkopf verjüngen. Dadurch soll das bei dem Eindrehen verdrängte Material des Untergrunds aus Kunststoff oder Leichtmetall längs jedes Kernabschnittes lediglich in eine rückseitige Richtung bis in den Kernabschnittsbereich kleinsten Durchmessers fließen, um nach einem in aller Regel zuvor durchgeführten Vorbohren ein verringertes Einschraubmoment der Schraube beim Eindrehen zu ermöglichen.

JP 2003 042121 A offenbart eine Holzschraube, welche in ein Holzmaterial eingebracht werden kann. Eine solche Holzschraube weist zwischen einem Schraubenkopf und einer Schraubenspitze einen Schaftabschnitt mit einem Gewinde auf. Die einen Gewindegänge haben dabei eine größere radiale Erstreckung als die anderen Gewindegänge. Zwischengewindeabschnitte sind so ausgebildet, dass sie sich abwechselnd in Richtung der Schraubenspitze bzw. in Richtung des Schraubenkopfs hin verjüngen.

EP 0 012 441 A1 offenbart eine selbstfurchende Schraube mit einem Schraubenkopf und einer als Bohrer ausgebildeten Spitze zum Bohren von thermoplastischem Kunststoff sowie mit an der Spitze vorgesehenen ersten Gewindegängen, die einen relativ großen Flankenwinkel haben und sich in einen relativ weichen Kunststoff einfurchen können. Zweite Gewindegänge in einem Halteteil haben dagegen einen relativ kleinen Flankenwinkel. Zwischen zwei benachbarten Gewindegängen befinden sich eine Einschnürung, deren Profil durch gerade Linien begrenzt ist, die dachförmig zueinander verlaufen. Im Bereich der Linie verjüngen sich die Zwischengewindeabschnitt daher von der Schraubenspitze weg.

US 74489 offenbart eine Holzschraube mit einem Schaft, der sich vom Schraubenkopf zur Schraubenspitze hin kontinuierlich verjüngt. Ein Gewinde verjüngt sich hingegen nicht, außer ganz am äußersten Ende nahe der Schraubenspitze. Die Oberflächen des Gewindes sind nicht flach, sondern konvex und gerundet. Die Schraube soll Holz besser durchdringen können und einen festeren Halt im Holz bieten. Die Holzfasern breiten sich seitlich aus und werden zwischen und außerhalb des Gewindes kompaktiert.

Für das Einbringen einer Schraube in einen Untergrund aus Kunststoff ist vorgesehen, in dem Kunststoffuntergrund ein Loch vorzubohren bzw. dieses beim Spritzen vorzusehen (Urformen) und nachfolgend eine Schraube in das Loch einzudrehen. Das Loch wird mit einem Durchmesser vorgebohrt, der größer als der Schaftdurchmesser der Schraube ist. Dabei können Abschnitte einer Schraube für einen Kunststoffuntergrund zwischen benachbarten Gewindegängen eine von einer Kreiszylindergeometrie abweichende Gestalt haben. Bei einer als RST bezeichneten Schraube der Firma Reyher zum Eindrehen in einen vorgebohrten Kunststoffuntergrund können Abschnitte der Schraube zwischen benachbarten Gewindegängen vom Schraubenkopf weg zum gegenüberliegenden Schraubenende hin verjüngend ausgebildet sein. Anschaulich schneiden sich die hohen Gewindegänge solcher Schrauben für Kunststoffuntergründe in das Kunststoffmaterial ein, das an das vorgebohrte Bohrloch angrenzt. Anders ausgedrückt beruht die Verankerungswirkung solcher Schrauben für Kunststoffuntergründe einzig auf der Verankerung der Gewindegänge in dem vorgebohrten Untergrund, wohingegen der Schraubenschaft in dem vorgebohrten Bohrloch im Wesentlichen frei liegt.

Gänzlich andere technische Prinzipien und physikalische Rahmenbedingungen als für Untergründe aus Kunststoff oder Leichtmetall gelten für das Einbringen einer Schraube in Holz. Beim Einbringen einer Schraube in Holz wird auf das Bilden einer Vorbohrung in der Regel verzichtet, vielmehr wird eine Holzschraube typischerweise in einen massiven Holzuntergrund vorbohrungsfrei eingedreht. Dabei schneidet sich das Gewinde einer Holzschraube in dem Holzuntergrund sein Gegengewinde selbst. Ein Beispiel für eine bekannte Holzschraube ist die von der Firma Würth vertriebene Schraube Assy Plus oder Assy 3.0. Ein Maß für die Güte der Verankerung einer Holzschraube in einem Holzuntergrund ist der Auszugswert. Damit wird die Zugkraft bezeichnet, die zum Herausziehen der Holzschraube aus dem Holzuntergrund, mithin zum Überwinden der Haltekraft der Holzschraube in dem Holzuntergrund, erforderlich ist.

Wenngleich die bekannte Holzschraube vom Typ Assy Plus bzw. Assy 3.0 bereits sehr gute Auszugswerte zeigt, wäre eine weiter verbesserte Auszugsfestigkeit einer Holzschraube dennoch wünschenswert.

Es ist eine Aufgabe der vorliegenden Erfindung, eine Holzschraube mit verbesserter Haltekraft bereitzustellen.

Diese Aufgabe wird durch die Gegenstände mit den Merkmalen gemäß den unabhängigen Patentansprüchen gelöst. Weitere Ausführungsbeispiele sind in den abhängigen Ansprüchen gezeigt.

Gemäß einem Ausführungsbeispiel der vorliegenden Erfindung ist eine Holzschraube (d.h. eine Schraube für einen Holzuntergrund, wobei die Schraube selbst aber vorzugsweise nicht aus Holz hergestellt ist) zum vorbohrungsfreien (d.h. ohne vorheriges Anfertigen eines Bohrlochs vor dem Einbringen der Schraube in den Untergrund) Einbringen in einen Holzuntergrund geschaffen, wobei die Holzschraube einen Schaftabschnitt mit einem in Holz selbstschneidenden (zum Beispiel eingängigen oder mehrgängigen) Gewinde (das durch um einen Schraubenkern spiralförmig umlaufende Gewindegänge gebildet sein kann), einen an den Schaftabschnitt rückseitig (bezogen auf eine Einbringrichtung der Holzschraube in den Untergrund) direkt (d.h. ohne dazwischen angeordnete weitere Komponente) oder indirekt (d.h. mit dazwischen angeordneter weiterer Komponente) angeschlossenen Schraubenkopf (der gegenüber dem Schaftabschnitt radial aufgeweitet sein kann), und eine an den Schaftabschnitt vorderseitig (bezogen auf die Einbringrichtung der Holzschraube in den Untergrund) direkt (d.h. ohne dazwischen angeordnete weitere Komponente) oder indirekt (d.h. mit dazwischen angeordneter weiterer Komponente) angeschlossene Schraubenspitze (die gegenüber dem Schaftabschnitt radial verengt sein kann) zum vorbohrungsfreien Eindringen in den Holzuntergrund aufweist (d.h. die ausgebildet sein kann, ein Einschneiden oder Einbohren in eine Außenfläche eines massiven Holzuntergrunds zu beginnen), wobei an dem Schaftabschnitt zwischen benachbarten Gewindegängen (d.h. in sogenannten Zwischengewindeabschnitten) sich in Richtung der Schraubenspitze verjüngende Abschnitte (d.h. derart, dass bei einem jeweiligen Zwischengewindeabschnitt der Radius von der Schraubenachse zur Oberfläche des Kerns an dem schraubenkopfseitigen Ende größer ist als an dem schraubenspitzenseitigen Ende) ausgebildet sind.

Gemäß einem weiteren Ausführungsbeispiel der vorliegenden Erfindung ist ein Verfahren zum Einbringen einer Holzschraube in einen Holzuntergrund bereitgestellt, wobei bei dem Verfahren eine Schraubenspitze an einem vorderseitigen Ende der Holzschraube vorbohrungsfrei an den Holzuntergrund angesetzt wird (insbesondere an eine insbesondere ebene Außenfläche des nicht vorgebohrten Holzuntergrunds angesetzt wird), die Holzschraube mittels Betätigens eines Schraubenkopfs an einem rückseitigen Ende der Holzschraube angetrieben wird, um eine (insbesondere axiale und/oder radiale) Setzkraft auf die Holzschraube derart auszuüben, dass die Schraubenspitze vorbohrungsfrei in den Holzuntergrund eindringt und ein Gewinde an einem Schaftabschnitt der Holzschraube zwischen Schraubenspitze und Schraubenkopf selbstschneidend ein Gegengewinde in dem Holzuntergrund schneidet, wobei an dem Schaftabschnitt zwischen benachbarten Gewindegängen sich in Richtung der Schraubenspitze verjüngende Abschnitte ausgebildet sind, die beim axialen Eindringen der Holzschraube in den Holzuntergrund Holzmaterial radial verdrängen.

Gemäß noch einem anderen Ausführungsbeispiel der vorliegenden Erfindung ist ein Verfahren zum Herstellen einer Holzschraube zum vorbohrungsfreien Einbringen in einen Holzuntergrund geschaffen, wobei bei dem Verfahren ein Schaftabschnitt der Holzschraube mit einem in Holz selbstschneidenden Gewinde ausgebildet wird, ein an den Schaftabschnitt rückseitig direkt oder indirekt angeschlossener Schraubenkopf ausgebildet wird, eine an dem Schaftabschnitt vorderseitig direkt oder indirekt angeschlossene Schraubenspitze zum vorbohrungsfreien Eindringen in den Holzuntergrund ausgebildet wird, und sich in Richtung der Schraubenspitze verjüngende Abschnitte zwischen benachbarten Gewindegängen an dem Schaftabschnitt ausgebildet werden.

Gemäß einem weiteren Ausführungsbeispiel der vorliegenden Erfindung wird eine Holzschraube mit den oben beschriebenen Merkmalen zum insbesondere vorbohrungsfreien Einbringen in einen Holzuntergrund verwendet.

Gemäß einem Ausführungsbeispiel ist eine Holzschraube bereitgestellt, die ohne die Notwendigkeit des Bildens eines Bohrlochs vor dem Einbringen der Holzschraube in einen Holzuntergrund selbstschneidend bzw. selbstbohrend in Letzterem verankert werden kann. Dabei wird eine hohe Haltekraft dadurch erreicht, dass sich nicht nur das selbstschneidende Gewinde in dem Holzmaterial ein verankerndes Gegengewinde schneidet, sondern zusätzlich auch die sich in Richtung der Schraubenspitze hin verjüngenden Abschnitte zwischen benachbarten Gewindegängen bei einem sukzessiven axialen Vortrieb der Holzschraube in radialer Richtung Holzmaterial verdrängen und dieses dadurch komprimieren, so dass neben großen Bereichen der Gewindeflanken auch die sich verjüngenden Zwischengewindeabschnitte zwischen den Gewindegängen kraft- bzw. reibschlüssig gegen das Holzmaterial gepresst werden und somit die Verankerungskraft erhöhen. Der durch das selbstfurchende Eindrehen des Gewindes in den Holzuntergrund erzeugte Zwangsvorschub der Schraube in den Holzuntergrund hinein führt aufgrund der Verjüngung der Gewindezwischenabschnitte auch zu einer zusätzlichen radialen Komponente der Verankerungskraft. Dadurch wird die Haltekraft der Holzschraube gegenüber herkömmlichen Holzschrauben verbessert bzw. werden die Auszugswerte erhöht. Ferner kann zudem ohne das Erfordernis des Hinzufügens weiteren Schraubenkernmaterials, anschaulich also durch bloßes Umlagern von Schraubenkernmaterial von vorne nach hinten, die Haltekraft verbessert werden. Indem die Verjüngungsrichtung der Zwischengewindeabschnitte mit der axialen Einbringrichtung der Holzschraube in den Holzuntergrund zusammenfällt bzw. identisch ist, verdrängen die zum Beispiel keil- bzw. pfeilförmigen Zwischengewindeabschnitte der erfindungsgemäßen Holzschraube das umgebende Holzmaterial ähnlich wie Holzschrauben mit einem zylindrischen Kern, da die Querschnitte gleich groß sind, jedoch erhöhen vermutlich die radial vergrößerten Gewindeflanken die Haltekraft der Holzschraube sowie die durch die Neigung der Zwischengewindeabschnitte induzierten geänderten Druckverhältnisse.

Ferner sei angemerkt, dass herkömmliche Schrauben für Kunststoff- bzw. Leichtmetalluntergründe die beschriebenen vorteilhaften Wirkungen von Holzschrauben gemäß exemplarischen Ausführungsbeispielen der Erfindung nicht erreichen, da diese aufgrund des Vorbohrens ausreichend großer Bohrlöcher vor dem Einbringen einer Schraube zu gar keinem radial materialverdrängenden Kontakt zwischen Zwischengewindeabschnitten einer solchen Schraube und der Bohrlochwandung gelangen. Stattdessen beruht die Befestigungswirkung derartiger herkömmlicher Schrauben lediglich auf dem Einschneiden der Gewindegänge in die Bohrlochwandung. Sich in Richtung des Schraubenkopfs hin verjüngende Zwischengewindeabschnitte würden, selbst wenn diese für Holzschrauben eingesetzt würden, nicht zu der oben beschriebenen Wirkungsweise und einer darauf beruhenden Erhöhung der Haltekraft führen.

Im Weiteren werden zusätzliche exemplarische Ausführungsbeispiele der Holzschraube, der Verfahren und der Verwendung beschrieben.

Gemäß einem exemplarischen Ausführungsbeispiel können an dem Schaftabschnitt zwischen benachbarten Gewindegängen sich in Richtung der Schraubenspitze konisch verjüngende Abschnitte ausgebildet sein. Anders ausgedrückt können die Zwischengewindeabschnitte als Kegelstümpfe mit einseitigem axialen Versatz ausgebildet sein. Insbesondere Zwischengewindeabschnitte in einem zentralen Abschnitt des Gewindes können (insbesondere hinsichtlich der axialen Länge, der Außendurchmesser und/oder des Verjüngungsverlaufs) identisch ausgebildet sein. Dies führt zu einer besonders symmetrischen Konfiguration und daher zu einer homogenen Krafteinleitung in den Holzuntergrund.

Gemäß einem exemplarischen Ausführungsbeispiel können an dem Kern zwischen benachbarten Gewindegängen sich in Richtung der Schraubenspitze gegenüber einer Schraubenachse gekrümmt, insbesondere zumindest abschnittsweise konkav und/oder konvex gekrümmt, verjüngende Abschnitte ausgebildet sein. Durch das Krümmungsverhalten der Zwischengewindeabschnitte kann die Charakteristik der Krafteinleitung in den Holzuntergrund und somit der Auszugsfestigkeit feinjustiert werden.

Gemäß einem exemplarischen Ausführungsbeispiel können an dem Schaftabschnitt zwischen allen benachbarten Gewindegängen sich in Richtung der Schraubenspitze verjüngende Abschnitte ausgebildet sein. Alternativ kann nur ein Teilabschnitt des Schaftabschnitts mit den sich in Richtung der Schraubenspitze verjüngenden Abschnitten ausgestattet sein, wohingegen andere Zwischengewindeabschnitte einen kreiszylinderförmigen Schaftteilabschnitt aufweisen können oder einen sich in Richtung des Schraubenkopfs verjüngenden Abschnitt. Zwischen dem schraubenkopfnächsten Gewindegang und dem Schraubenkopf kann ebenfalls ein sich zur Schraubenspitze hin verjüngender Abschnitt vorgesehen sein. Zwischen dem schraubenspitzennächsten Gewindegang und der Schraubenspitze kann ebenfalls ein sich zur Schraubenspitze hin verjüngender Abschnitt vorgesehen sein.

Gemäß einem exemplarischen Ausführungsbeispiel können die sich verjüngenden Abschnitte (in einer axialen Querschnittsansicht) gegenüber einer Schraubenachse derart verschwenkt sein, dass ein sich an einen jeweils hinterseitigen bzw. schraubenkopfseitigen Gewindegang anschließendes Zusatzmaterial (eines Zwischengewindeabschnitts) durch ein sich an den jeweils vorderseitigen bzw. schraubenspitzenseitigen Gewindegang anschließendes Fehlmaterial (des Zwischengewindeabschnitts) gerade ausgeglichen ist. Anders ausgedrückt kann an dem verdickten Bereich eines sich verjüngenden Abschnitts im Vergleich zu einem kreiszylindrischen Schraubenkern genau die Materialmenge angelagert sein, die an einem verdünnten Bereich desselben sich verjüngenden Abschnitts gegenüber der Kreiszylindergeometrie eines massengleichen Schraubenkerns fehlt. In Summe kann damit die Masse eines sich verjüngenden Abschnitts der Masse eines entsprechenden, von einer Verjüngung freien Zwischengewindeabschnitts gleichen. Dies ist vorteilhaft, da die sich verjüngenden Abschnitte folglich durch eine reine Materialumlagerung ausgehend von einem Rohling und somit mit geringerem Aufwand hergestellt werden können als dies bei einem Zusatzmaterial applizierenden Verfahren oder bei einem materialabtragenden Verfahren der Fall wäre.

Gemäß einem exemplarischen Ausführungsbeispiel können die sich verjüngenden Abschnitte gegenüber der Schraubenachse derart verschwenkt sein (bei einer virtuellen Schwenkachse senkrecht zur Schraubenachse), dass der jeweilige sich verjüngende Abschnitt einen massenäquivalenten Kreiszylinderkern in der Mitte (und somit vorzugsweise an der gedachten Schwenkachse) zwischen einem jeweiligen hinterseitigen Gewindegang und einem jeweiligen vorderseitigen Gewindegang schneidet. Diese Maßnahme hat Vorteile im Hinblick auf eine einfache Herstellbarkeit der Holzschraube sowie eine homogene Krafteinleitung in den massiven Holzuntergrund.

Gemäß einem exemplarischen Ausführungsbeispiel kann ein Verkippwinkel einer linearen Begrenzungslinie von zumindest einem Teil der sich verjüngenden Abschnitte der Holzschraube gegenüber einer Schraubenachse in einem Bereich zwischen ungefähr 5° und ungefähr 25°, insbesondere in einem Bereich zwischen ungefähr 10° und ungefähr 20°, liegen. In diesem Winkelbereich kann eine besonders starke Erhöhung der Haltekraft der Holzschraube in dem Holzuntergrund erreicht werden, ohne dass dadurch ein Eindrehmoment der Holzschraube in den Holzuntergrund in signifikanter Weise erhöht würde. Unter dem Eindrehmoment wird die durch Aufbringen eines Drehmoments aufgewendete Kraft verstanden, um die Schraube vorbohrungsfrei in den massiven Holzuntergrund einzudrehen. Bei zu kleinen Verkippwinkeln wird die Erhöhung der Haltekraft zu klein, wohingegen bei zu hohen Verkippwinkeln die Holzschraube abschnittsweise zu dünn werden kann und somit mechanisch geschwächt werden kann.

Gemäß einem exemplarischen Ausführungsbeispiel kann ein Flankenwinkel von zumindest einem Teil der Gewindegänge in einem Bereich zwischen ungefähr 30° und ungefähr 70°, insbesondere in einem Bereich zwischen ungefähr 40° und ungefähr 60°, liegen. Derartige Flankenwinkel sind zum Erreichen einer besonders guten Haltekraft vorteilhaft, da dann die Gewindeflanken effizient an das Holz angreifen können.

Gemäß einem exemplarischen Ausführungsbeispiel kann die Schraubenspitze auf ein im Wesentlichen punktförmiges Ende der Holzschraube zulaufen. Gemäß einem anderen exemplarischen Ausführungsbeispiel kann die Schraubenspitze mindestens eine endseitige Schneidkante aufweisen. Hinsichtlich der Ausgestaltung der Schraubenspitze gibt es somit unterschiedliche Möglichkeiten, wobei die Schraubenspitze vorteilhaft so konfiguriert sein kann, dass die Holzschraube ohne Vorbohrung in einen massiven Holzuntergrund eingedreht werden kann.

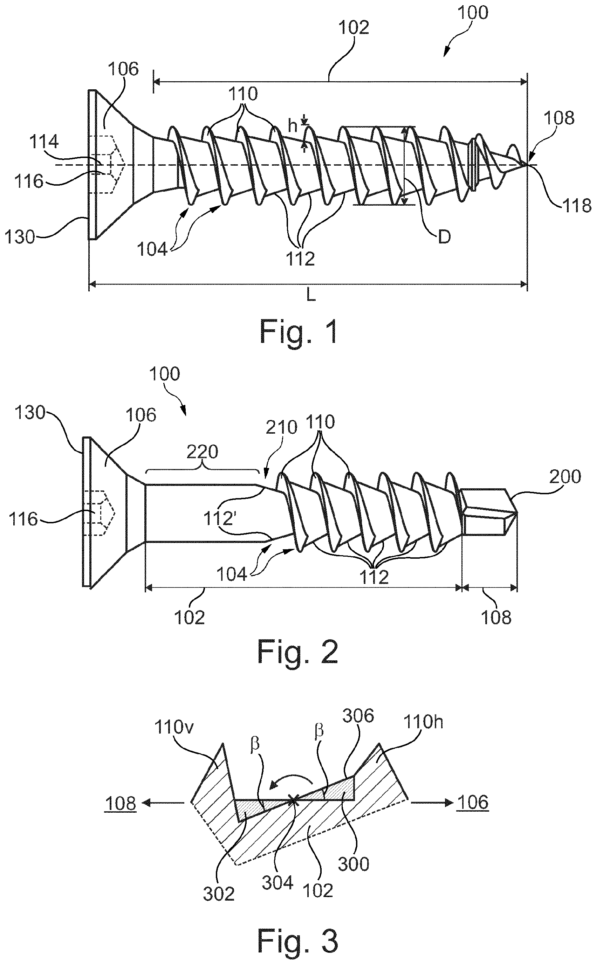

Gemäß einer ersten Ausgestaltung kann die Schraubenspitze als ein punktförmiges Ende der Holzschraube gebildet sein, wobei sich das Gewinde direkt ausgehend von dem punktförmigen Ende entlang des Schaftabschnitts erstrecken kann. Eine solche Ausgestaltung ist in Figur 1 gezeigt. Wenn der Gewindeansatz direkt an dem punktförmigen Ende beginnt, kann bei Ansetzen des punktförmigen Endes auf die (insbesondere nicht vorgebohrte) Oberfläche eines Holzuntergrunds das Gewinde unmittelbar greifen und mit dem selbstfurchenden bzw. selbstschneidenden Eindringen in den Untergrund beginnen. Mit dieser Ausgestaltung der Schraubenspitze ist ein Vorbohren entbehrlich und ein kraftarmes Einbringen ermöglichst, da der Zwangsvorschub des Gewindes einen Monteur gleich von Beginn des Setzvorgangs an unterstützt.

Gemäß einer alternativen zweiten Ausgestaltung kann die Schraubenspitze als Bohrspitze mit mindestens einer endseitigen Schneidkante ausgebildet sein. Eine solche, zum Beispiel lineare scharfe Schneidkante kann als mindestens eine Hauptschneide ausgebildet sein und wie bei einem Bohrer ein Loch in einem hölzernen Untergrund generieren. Optional kann auch noch mindestens eine Querschneide an der Bohrspitze vorgesehen sein, wie den Fachleuten auf dem Gebiet der Schrauben und Bohrer bekannt.

Gemäß einem exemplarischen Ausführungsbeispiel kann der Schraubenkopf mit einem Antrieb zum Drehantreiben der Holzschraube versehen sein. Ein solcher Antrieb dient zum formschlüssigen Kontakt mit einem Werkzeug zum Eindrehen der Schraube, wie zum Beispiel ein muskelbetriebener Schraubendreher oder ein motorbetriebenes Setzgerät (zum Beispiel ein Akkuschrauber). Ein rückseitiges Ende der Schraube kann somit durch den Schraubenkopf mit einem Antrieb zum Drehantreiben der Schraube gebildet sein. Der Antrieb kann als Längsschlitz, als Kreuzschlitz, als Imbus, als TORX-Antrieb oder als AW-Antrieb ausgebildet werden.

Erfindungsgemäß bilden die sich verjüngenden Abschnitte (wenn das Gewinde weggedacht wird) an dem Kern eine Sägezahnstruktur. Dadurch ist, insbesondere wenn die Sägezahnstrukturen untereinander eine gleiche Form und gleiche Dimensionen aufweisen, eine besonders regelmäßige Geometrie und folglich eine gleichmäßige Krafteinleitung in den Holzuntergrund gewährleistet.

Gemäß einem exemplarischen Ausführungsbeispiel kann der Schaftabschnitt einen zwischen dem Schraubenkopf und dem Gewinde angeordneten gewindefreien Abschnitt aufweisen, wobei derjenige der verjüngenden Abschnitte, der im kleinsten Abstand zu dem Schraubenkopf angeordnet ist, einen kontinuierlichen Übergang zwischen dem gewindefreien Abschnitt und dem mit dem Gewinde versehenen Abschnitt des Schaftabschnitts bilden kann. Anschaulich können die sich nach vorne hin verjüngenden Abschnitte rückseitig bis zu einem glatten, gewindefreien Bereich des Schaftabschnitts hin erstrecken. Bei herkömmlichen Holzschrauben bildet genau diese Schnittstelle zwischen gewindefreiem Abschnitt und Gewindeabschnitt eine bruchanfällige Stelle, an der ein Absatz bzw. eine Stufe gebildet sein kann, die als unerwünschte Schwachstelle wirken kann, an der häufig ein Schraubenbruch infolge starker mechanischer Belastung der Schraube auftritt. Folglich reißen herkömmlich an dieser Stelle Schrauben oft ab, wenn diese übermäßigen mechanischen Belastungen ausgesetzt werden. Dies kann erfindungsgemäß dadurch vermieden oder zumindest unterdrückt werden, dass durch den in Eintreibrichtung hintersten verjüngten Abschnitt (der noch vor Gewindebeginn positioniert sein kann) ein stetiger, stufenfreier bzw. homogener Übergang zwischen dem gewindefreien Abschnitt und dem Gewindeabschnitt erzeugt wird. Dadurch ist ein unerwünschtes Abreißen der Holzschraube an dieser Stelle unterdrückt bzw. vermieden. Anders ausgedrückt kann das Vorsehen der verjüngten Abschnitte neben der verbesserten Haltekraft synergistisch auch die mechanische Robustheit der Holzschraube verbessern.

Gemäß einem Ausführungsbeispiel können an dem Schaftabschnitt in einem jeweils gesamten axialen Bereich zwischen einem jeweiligen Paar von benachbarten Gewindegängen sich in Richtung der Schraubenspitze verjüngende Abschnitte ausgebildet sein (dies ist in jeder der Figuren 1 bis 6, 8 und 12 gezeigt). Anders ausgedrückt kann der gesamte (insbesondere glatte) axiale Bereich, der von jedem benachbarten Paar von Gewindegängen begrenzt ist, von sich zur Schraubenspitze hin auch nur abschnittsweise radial erweiternden Abschnitten frei sein. Wenn die sich zur Schraubenspitze hin gebildete Verjüngung in dem gesamten Abschnitt zwischen jeweils direkt benachbarten Gewindegängen kontinuierlich erstreckt, sind die Zwischengewindeabschnitte von Unstetigkeiten bzw. Diskontinuitäten frei, so dass sich die oben beschriebenen vorteilhaften Effekte ungestört entfalten können.

Gemäß einem exemplarischen Ausführungsbeispiel kann die Holzschraube mittels Drehbetätigens eines Antriebs an dem Schraubenkopf angetrieben werden. Zum Beispiel kann ein muskelkraftbetriebener Schraubendreher oder ein motorkraftbetriebenes Schraubgerät eingesetzt werden, um die Holzschraube drehend in den Holzuntergrund einzubringen. Ein Zwangsvorschub der Holzschraube in dem Holzuntergrund wird dabei durch das selbstschneidende Gewinde der Holzschraube bewirkt, was das axiale Eindringen der Schraube in den Holzuntergrund kraftarm ermöglicht.

Gemäß einem anderen exemplarischen Ausführungsbeispiel kann die Holzschraube mittels Ausübens einer rein oder vorwiegend axialen Setzkraft auf den Schraubenkopf angetrieben werden, insbesondere eingenagelt oder eingeschossen werden. Aufgrund der relativ niedrigen Gewindehöhe einer Holzschraube gemäß einem exemplarischen Ausführungsbeispiel ist auch ein drehfreies Einbringen der Holzschraube in einen vorgebohrten oder nicht vorgebohrten Holzuntergrund möglich, zum Beispiel mittels eines entsprechend konfigurierten Bolzenschubwerkzeugs.

Gemäß einem Ausführungsbeispiel kann die Schraube mittels Kaltmassivumformen (zum Ausbilden von Kopf bzw. Antrieb), Kneifen (zum Ausbilden der Schraubenspitze) und Walzen (zum Bilden des Gewindes) ausgebildet werden.

Gemäß einem exemplarischen Ausführungsbeispiel können die sich verjüngenden Abschnitte zumindest teilweise beim Walzen des Gewindes ausgebildet werden. Dabei erfolgt lediglich eine für das Ausbilden der sich verjüngenden Abschnitte ausreichende Materialumlagerung, so dass das Aufbringen oder Entfernen von Material zum Ausbilden der sich verjüngenden Abschnitte entbehrlich ist.

Gemäß einem exemplarischen Ausführungsbeispiel können die sich verjüngenden Abschnitte zumindest teilweise beim Kneifen der Schraubenspitze ausgebildet werden. Auch gemäß dieser Ausgestaltung können die verjüngten Abschnitte hergestellt werden, ohne dass hierfür ein separater Arbeitsgang erforderlich ist.

Im Folgenden werden exemplarische Ausführungsbeispiele der vorliegenden Erfindung mit Verweis auf die folgenden Figuren detailliert beschrieben.
Figur 1 zeigt eine Holzschraube gemäß einem exemplarischen Ausführungsbeispiel mit einer punktförmigen Schraubenspitze und mit sich zu der Schraubenspitze hin verjüngenden kegelstumpfförmigen Gewindezwischenabschnitten.
Figur 2 zeigt eine Holzschraube gemäß einem anderen exemplarischen Ausführungsbeispiel mit einer Bohrspitze mit Schneidkanten und mit sich zu der Schraubenspitze hin verjüngenden kegelstumpfförmigen Gewindezwischenabschnitten.
Figur 3 zeigt eine vergrößerte Darstellung eines massekompensierten, sich zu einer Schraubenspitze hin konisch verjüngenden Abschnitts an einem Zwischengewindeabschnitt einer Holzschraube gemäß einem exemplarischen Ausführungsbeispiel der Erfindung.
Figur 4 bis Figur 6 zeigen Schaftabschnitte einer Holzschraube gemäß einem exemplarischen Ausführungsbeispiel der Erfindung in unterschiedlichen Vergrößerungsgraden.
Figur 7 zeigt eine Tabelle, in der Eindrehmomente einer herkömmlichen Holzschraube und einer Holzschraube gemäß einem exemplarischen Ausführungsbeispiel der Erfindung beim vorbohrungsfreien Eindrehen in einen Buchenholzuntergrund gegenübergestellt sind.
Figur 8 zeigt eine herkömmliche Holzschraube und eine Holzschraube gemäß einem exemplarischen Ausführungsbeispiel der Erfindung, die für die Experimente gemäß Figur 7 eingesetzt worden sind.
Figur 9 zeigt eine Tabelle, in der die Auszugskräfte einer vorbohrungsfrei eingedrehten herkömmlichen Holzschraube und einer vorbohrungsfrei eingedrehten Holzschraube gemäß einem exemplarischen Ausführungsbeispiel der Erfindung aus einem Fichtenholzuntergrund gegenübergestellt sind.
Figur 10 zeigt eine Tabelle, in der die Auszugskräfte einer vorbohrungsfrei eingedrehten herkömmlichen Holzschraube und einer vorbohrungsfrei eingedrehten Holzschraube gemäß einem exemplarischen Ausführungsbeispiel der Erfindung aus einem Buchenholzuntergrund gegenübergestellt sind.
Figur 11 zeigt eine Tabelle, in der die Auszugskräfte einer herkömmlichen Holzschraube und einer Holzschraube gemäß einem exemplarischen Ausführungsbeispiel der Erfindung aus einem vorgebohrten Fichtenholzuntergrund gegenübergestellt sind.
Figur 12 zeigt eine herkömmliche Holzschraube und eine Holzschraube gemäß einem exemplarischen Ausführungsbeispiel der Erfindung, bei denen jeweils die Schraubenspitze abgeschliffen wurde.

Gleiche oder ähnliche Komponenten in unterschiedlichen Figuren sind mit gleichen Bezugsziffern versehen.

Bevor bezugnehmend auf die Figuren exemplarische Ausführungsbeispiele der Erfindung beschrieben werden, sollen noch einige allgemeine Aspekte der Erfindung erläutert werden:
Ausgangspunkt der Überlegungen der vorliegenden Erfinder war eine Holzschraube mit einem kreiszylindrischen Kern. Die vorliegenden Erfinder stellten jedoch fest, dass eine solche herkömmliche Schrauben hinsichtlich der Auszugswerte (d.h. des von der Schraube gebotenen Widerstands gegen Herausziehen aus dem Holzuntergrund) und des Bruchdrehmoments (d.h. eines auf den Schraubenkopf ausgeübten Drehmoments bei gleichzeitigen Einspannen des Schaftabschnitts, bei welchem Drehmoment eine unerwünschte Abtrennung im Bereich des Gewindeübergangs erfolgt) noch Verbesserungspotenzial aufwies.

Gemäß einem exemplarischen Ausführungsbeispiel ist eine vorzugsweise aus Metall hergestellte Schraube für Holzanwendungen bereitgestellt, wobei der Kern der Holzschraube nicht durchweg parallel zur Schraubenachse geformt wird, sondern stattdessen in Abschnitten jeweils winkelig auf die Schraubenspitze bzw. die Schraubenachse zuläuft. Dies führt zu höheren Auszugswerten. Durch die beschriebene Maßnahme entsteht auch eine höhere tragende Gewindeflanke bei gleichem Außendurchmesser der Holzschraube, sowie ein ausgeprägter radialer Druck. Die höhere Gewindeflanke und die sich verjüngenden Zwischengewindeabschnitte können für Druck oder Zug eingesetzt werden, je nachdem in welche Richtung diese wirken. Durch den Schraubenkern mit hin zur Schraubenspitze verjüngten Zwischengewindeabschnitten kann auch ein besonders homogener Übergang zwischen Schraubenkopf und Gewindeabschnitt, insbesondere zwischen einem gewindefreien Abschnitt und einem Gewindeabschnitt der Holzschraube, erreicht werden, was zu einem höheren Bruchdrehmoment führt. Dieser Effekt kann im bzw. am kopfseitig letzten Gewindegang genutzt werden.

Holzschrauben gemäß exemplarischen Ausführungsbeispielen der Erfindung können mit symmetrischem oder asymmetrischem Gewinde ausgebildet werden. Bei einem asymmetrischen Gewinde ist die ansteigende Flanke mit einem anderen Anstiegswinkel versehen als die abfallende Flanke, wohingegen bei einem symmetrischen Gewinde der Winkel der ansteigenden Flanke und jener der abfallenden Flanke gleich sind. Erfindungsgemäße Holzschrauben können selbstschneidend bzw. selbstfurchend in einem Holzuntergrund ausgebildet sein. Als Schraubenspitze für Holzschrauben gemäß exemplarischen Ausführungsbeispielen können eine selbstbohrende bzw. selbstschneidende Spitze eingesetzt werden, die gekniffen oder gewalzt werden kann. Holzschrauben gemäß exemplarischen Ausführungsbeispielen können zum Beispiel aus Edelstahl (rostfrei), Kohlenstoffstahl, etc. hergestellt werden. Die Holzschraube kann beschichtet (zum Beispiel gewachst) oder verzinkt werden oder erst verzinkt und dann gewachst werden, um die Gleiteigenschaften der Holzschraube in einem Holzuntergrund weiter zu verbessern. Hinsichtlich der Neigung der Kernabschnitte sind verschiedenste Konfigurationen möglich. Zum Beispiel kann die Schwenkachse, gemäß welcher der geneigte Kernabschnitt gegenüber einem gedachten, kreiszylindrischen Kernabschnitt verkippt ist, mittig zwischen zwei Gewindegängen angebracht sein, so dass ein Materialabhub in einem vorderseitigen Schraubenabschnitt einem Materialaufbau in einem zugehörigen hinterseitigen Schraubenabschnitt entspricht. Die Fläche zwischen den Gewindegängen kann gerade oder gekrümmt sein, beispielsweise konkav und/oder konvex. Die Fläche zwischen den Gewindegängen kann zum Beispiel aus zwei Kreissegmenten mit unterschiedlichen Radien zusammengesetzt sein.

**Figur 1** zeigt eine Seitenansicht einer aus Stahl gebildeten, oberflächlich gewachsten Holzschraube 100 gemäß einem exemplarischen Ausführungsbeispiel mit einem Schaftabschnitt 102 mit Gewinde 104 zwischen einer punktförmigen Schraubenspitze 118 und einem Schraubenkopf 106. Die Holzschraube 100 hat sich zu der Schraubenspitze 118 hin verjüngende kegelstumpfförmige Gewindezwischenabschnitte oder Zwischengewindeabschnitte 112 zwischen jeweils zwei Gewindegängen 110 des Gewindes 104.

Die in Figur 1 gezeigte Holzschraube 100 ist so ausgestaltet, dass diese ohne die Notwendigkeit, vor dem Eindrehen der Holzschraube 100 in einen massiven Holzuntergrund (nicht gezeigt) eine Vorbohrung in dem Holzuntergrund zu erstellen (d.h. vorbohrungsfrei), in einen massiven Holzuntergrund eingedreht werden kann. Gemäß exemplarischen Ausführungsbeispielen der Erfindung ist es aus den unten näher beschriebenen Gründen in der Regel sogar erwünscht, auf eine Vorbohrung zu verzichten, da dies zu besonders guten Auszugswerten der eingedrehten Holzschraube 100 führt. Die besonders gute Haltekraft der Holzschraube 100 in einem massiven Holzuntergrund beruht nicht nur auf einem Formschluss zwischen dem selbstschneidenden Gewinde 104 der Holzschraube 100 einerseits und einem in den massiven Holzuntergrund selbstgeschnittenen Gegengewinde, sondern darüber hinaus auf einer Verdrängung und Verdichtung von Holzmaterial durch die sich zur Schraubenspitze 118 hin verjüngenden Abschnitte bzw. Zwischengewindeabschnitte 112, die während des Setzvorgangs und im gesetzten Zustand der Holzschraube 100 gegen das verdrängte und komprimierte Holzmaterial allseitig und vollumfänglich um die Holzschraube 100 reibschlüssig drücken.

An einer Rückseite des zentralen Schaftabschnitts 102 mit dem in Holz selbstschneidenden Gewinde 104 schließt sich in dem Ausführungsbeispiel gemäß Figur 1 direkt der Schraubenkopf 106 mit einem Antrieb 116 an. Der Antrieb 116 ist so ausgebildet, dass ein Drehwerkzeug (nicht gezeigt) in den Antrieb 116 formschlüssig eingreifen kann und mittels Beaufschlagens der Holzschraube 100 mit einem Drehmoment diese vorbohrungsfrei in den massiven Holzuntergrund eindrehen kann. An einer Vorderseite - bezogen auf eine Setzrichtung der Holzschraube 100 - des Schaftabschnitts 102 mündet dessen Gewinde 104 unmittelbar in der an das Gewinde 104 direkt angeschlossenen punktförmigen Schraubenspitze 108, wodurch die vorbohrungsfreie Eindrehbarkeit der Holzschraube 100 in den massiven Holzuntergrund bewirkt bzw. gefördert wird. Genauer gesagt beginnt das Gewinde 104 in unmittelbarer Nähe der Schraubenspitze 108, die hier als punktförmiges Ende 118 der Holzschraube 100 ausgebildet ist. Anders ausgedrückt geht das Gewinde 104 des Schaftabschnitts 102 nahtlos in die Schraubenspitze 108 über. Dadurch kann erreicht werden, dass durch das bloße Aufsetzen der punktförmigen Spitze 118 auf den massiven Holzuntergrund und mittels Ausübens mäßigen Drucks und eines Drehmoments auf den Antrieb 116 die punktförmige Spitze 118 drehend auf den Holzuntergrund gedrückt oder gepresst wird, was dann zu einem Eindrehen der Holzschraube 100 und zu einem Selbstschneiden des Gegengewindes in dem Holzuntergrund führt.

Wie bereits angesprochen, befinden sich konisch in Richtung der Schraubenspitze 108 hin verjüngte Zwischengewindeabschnitte 112 mit hier im Wesentlichen kegelstumpfförmiger Geometrie zwischen benachbarten Gewindegängen 110 des Gewindes 104. Diese Zwischengewindeabschnitte 112 sind, in Kombination mit der Gewinde 104-Schraubenspitze 108-Kopplung zum vorbohrungsfreien Einbringen der Holzschraube 100 in einen massiven Holzuntergrund, der eigentliche Grund für die erhöhte Haltekraft der Holzschraube 100 in dem Holzuntergrund. Wird nämlich nach Aufsetzen des punktförmigen Endes 118 auf eine Außenfläche des massiven Holzuntergrunds mittels Drehantreibens des Antriebs 116 die Holzschraube 100 in den Holzuntergrund selbstbohrend und selbstschneidend eingebracht, so bewirkt das Eindrehen des Gewindes 104 in den bereits gebildeten Teil des Gegengewindes in dem Holzuntergrund einen Zwangsvorschub der Holzschraube 100 in den Holzuntergrund. Durch die resultierende kombinierte Dreh- und Axialbewegung der Holzschraube 100 hinein in den Holzuntergrund verdrängen und komprimieren die zur Schraubenachse 114 geneigten Zwischengewindeabschnitte 112 zwangsläufig Holzmaterial und üben auf dieses eine kombinierte Axial- und Radialkraft aus. Anders ausgedrückt wirken gerade die Zwischengewindeabschnitte 112 teils axial, teils radial auf das Holzmaterial ein, schieben sich keilförmig durch das Holzmaterial vorwärts, verpressen die festen Holzfasern und die dazwischen angeordneten weicheren Bereiche des Holzuntergrund in seitlicher Richtung und verankern unter Erzeugung einer zusätzlichen Haltekraft die Holzschraube 100 fest in dem massiven Holzuntergrund.

Wie auch bei anderen Ausführungsbeispielen der Erfindung kann bei der Holzschraube 100 gemäß Figur 1 die axiale Länge L der Holzschraube 100, d.h. der Abstand zwischen dem punktförmigen Ende 118 und einer Stirnfläche 130 des Schraubenkopfs 106, in einem Bereich zwischen 8 mm und 2000 mm liegen. Ein Außendurchmesser D des Schaftabschnitts 102 der Holzschraube 100 kann in einem Bereich zwischen 2 mm und 16 mm liegen. Eine Gewindehöhe h kann in einem Bereich zwischen 0,4 mm und 3,2 mm liegen. Ein Kerndurchmesser (D-2h), d.h. ein größter Durchmesser der zentralen kegelstumpfförmigen Zwischengewindeabschnitte 112, kann in einem Bereich zwischen 1,2 mm und 9,6 mm liegen.

**Figur 2** zeigt eine Holzschraube 100 gemäß einem anderen exemplarischen Ausführungsbeispiel mit einer als Bohrspitze ausgebildeten Schraubenspitze 108 mit Schneidkanten 200 und mit sich zu der Schraubenspitze 108 hin verjüngenden kegelstumpfförmigen Gewindezwischenabschnitten oder Zwischengewindeabschnitten 112.

Die Holzschraube 100 gemäß Figur 2 unterscheidet sich von der Holzschraube 100 gemäß Figur 1 vor allen Dingen hinsichtlich der beiden folgenden Merkmale:
Zum einen ist bei der erfindungsgemäßen Holzschraube 100 gemäß Figur 2 der Schaftabschnitt 102 rückseitig mit einem gewindefreien Abschnitt 220 zwischen einem rückseitigen Ende des Gewindes 104 einerseits und dem Schraubenkopf 106 andererseits versehen. Der hinterste der verjüngten Abschnitte 112', der im kleinsten Abstand zu dem Schraubenkopf 106 angeordnet ist, bildet gemäß Figur 2 einen kontinuierlichen, stetigen bzw. stufenfreien Übergang zwischen dem gewindefreien Abschnitt 220 und dem mit dem Gewinde 104 versehenen Abschnitt des Schaftabschnitts 102. Dadurch ist ein homogener Übergang des Schraubenkerns in einem Übergangsbereich 210 geschaffen, wodurch ein Bruchdrehmoment der Holzschraube 100 signifikant erhöht werden kann. Der Übergangsbereich 210 stellt herkömmlich eine Schwachstelle von Holzschrauben dar, an dem bei Ausüben eines Torsionsmoments zwischen Schraubenkopf 106 und Schraubenspitze 108 ein Abbrechen bzw. Abdrehen unter Zerstörung der Holzschraube erfolgt. Dies ist durch die sich nach vorne hin verjüngende Form des hintersten sich verjüngenden Abschnitts 112' unterbunden, da diese synergistisch auch zu einem homogeneren Übergang zwischen dem gewindefreien Abschnitt 220 und dem mit dem Gewinde 104 versehenen Abschnitt des Schaftabschnitts 102 führt.

Ein zweiter wesentlicher Unterschied zwischen dem Ausführungsbeispiel gemäß Figur 2 und jenem gemäß Figur 1 besteht darin, dass gemäß Figur 2 die Schraubenspitze 108 als Bohrspitze mit Schneidkanten 200 ausgeführt ist. Wie bei einem Bohrer dringt die Schraubenspitze 108 in einen vorbohrungsfreien Holzuntergrund ein, wobei die Schneidkanten 200 schneidend Material des Holzuntergrunds abtragen.

Figur 2 ist zu entnehmen, dass die Zwischengewindeabschnitte 112 abschnittsweise einen größeren Außendurchmesser aufweisen als die Bohrspitze 108, so dass es wiederum durch die Zwischengewindeabschnitte 112 zu einem Verdrängen und Komprimieren des Holzmaterials unter Ausbilden einer erhöhten Haltekraft zwischen den Zwischengewindeabschnitten 112 und dem umgebenden Holzmaterial kommt.

**Figur 3** zeigt eine vergrößerte Darstellung eines massekompensierten, sich zu einer Schraubenspitze 108 hin konisch verjüngenden Abschnitts bzw. Zwischengewindeabschnitts 112 an einem Schaftabschnitt 102 einer Holzschraube 100 gemäß einem exemplarischen Ausführungsbeispiel der Erfindung.

Figur 3 zeigt am Beispiel eines verjüngten Zwischengewindeabschnitts 112, dass dessen Außenkante 306 im Querschnitt gegenüber einer Schraubenachse 114 (siehe Figur 1) derart verschwenkt ist, dass ein sich an einen hinterseitigen Gewindegang 110h anschließendes Zusatzmaterial 300 durch ein sich an einen vorderseitigen Gewindegang 110v anschließendes Fehlmaterial 302 gerade ausgeglichen ist. Somit ist der Zwischengewindeabschnitt 112 gegenüber der Schraubenachse 114 derart um eine senkrecht zur Papierachse von Figur 3 und durch einen Mittelpunkt 304 laufende Schwenkachse verschwenkt, dass der Zwischengewindeabschnitt 112 einen hypothetischen bzw. virtuellen massenäquivalenten Kreiszylinderkern in der Mitte (siehe Mittelpunkt 304) zwischen dem hinterseitigen Gewindegang 110h und dem vorderseitigen Gewindegang 110v schneidet. Dies zeigt, dass bei Holzschrauben 100 gemäß exemplarischen Ausführungsbeispielen die verjüngten Zwischengewindeabschnitte 112 bloß durch Materialumformung bzw. - umlagerung von einem vorderen Schraubenbereich zu einem hinteren Schraubenbereich gebildet werden. Diese Materialumformung bzw. -umlagerung kann zum Beispiel während des normalen Herstellungsprozesses der Holzschraube 100 mittels Walzens erfolgen. Damit ist ein aufwändiger zusätzlicher Materialauftrag genauso vermieden wie ein aufwändiger Materialentfernungsprozess. Vielmehr können ohne zusätzlichen Arbeitsgang die nach vorne hin verjüngten Zwischengewindeabschnitte 112 während des normalen Herstellungsprozesses der Holzschraube 100 und somit ohne zusätzlichen Zeitaufwand erfolgen. Wenn also die virtuelle Schwenkachse in die Mitte zwischen zwei Gewindegängen 110 gelegt wird, wird an dem verdickten Bereich diejenige Materialmenge hinzugefügt, die von dem verdünnten Bereich entfernt wird.

Darüber hinaus zeigt Figur 3, dass ein Verkippwinkel β des verjüngten Zwischengewindeabschnitts 112 gegenüber einer Schraubenachse 114 zum Beispiel 15° betragen kann. Besonders bei einem Verkippwinkel zwischen ungefähr 5° und ungefähr 25° kann eine ausgeprägte Erhöhung der Haltekraft erreicht werden kann, ohne dass die Eindrehmomente übermäßig erhöht würden.

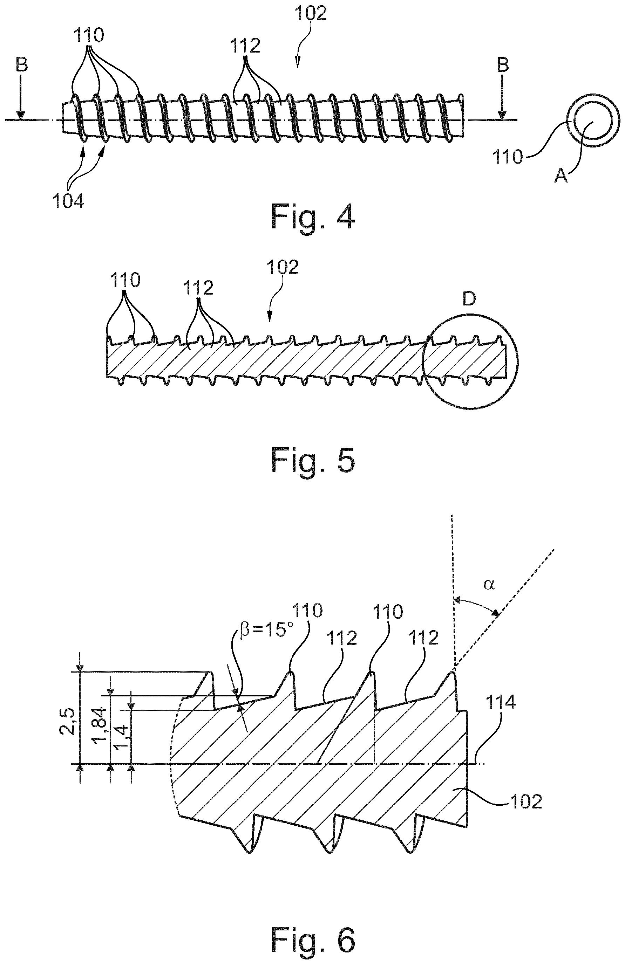

Figur 4 bis Figur 6 zeigen Schaftabschnitte 102 einer Holzschraube 100 gemäß einem exemplarischen Ausführungsbeispiel der Erfindung in unterschiedlichen Vergrößerungsgraden.

**Figur 4** zeigt eine Seitenansicht und einen Querschnitt des Schaftabschnitts 102 der Holzschraube 100. Eine Querschnittsfläche A kann zum Beispiel 10,10 mm² betragen. **Figur 5** zeigt eine Querschnittsansicht der Holzschraube 100 entlang einer Achse B-B gemäß Figur 4. **Figur 6** zeigt eine vergrößerte Ansicht eines in Figur 5 mit D bezeichneten Bereichs des Schaftabschnitts 102. Der Verkippwinkel β beträgt in diesem Ausführungsbeispiel 15°. Ein Flankenwinkel α beträgt in diesem Ausführungsbeispiel etwa 50°. Ein Abstand zwischen der Schraubenachse 114 und einer Außenspitze der Gewindegänge 110 beträgt 2,5 mm. Ein Abstand zwischen der Schraubenachse 114 und einem radialen Außenende der breitesten Stelle des jeweiligen verjüngten Zwischengewindeabschnitts 112 beträgt im gezeigten Ausführungsbeispiel 1,84 mm. Ein Abstand zwischen der Schraubenachse 114 und einem radialen Außenende der schmalsten Stelle des jeweiligen verjüngten Zwischengewindeabschnitts 112 beträgt im gezeigten Ausführungsbeispiel 1,4 mm.

Im Weiteren werden experimentelle Ergebnisse beschrieben, die aus einem Vergleich einer Holzschraube 100 bzw. 100' mit kegelstumpfförmigen Zwischengewindeabschnitten 112 gemäß exemplarischen Ausführungsbeispielen der Erfindung und einer herkömmlichen Holzschraube 800 bzw. 800' mit einem kreiszylindrischen Schraubenkern erhalten wurden.

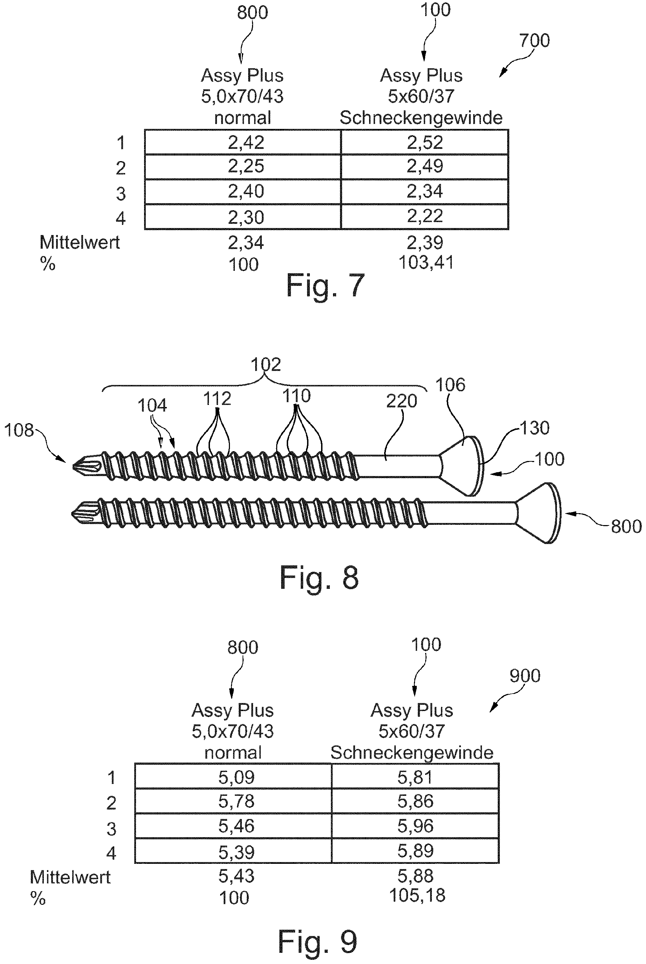

**Figur 7** zeigt eine Tabelle 700, in der Eindrehmomente der herkömmlichen Holzschraube 800 und der Holzschraube 100 gemäß einem exemplarischen Ausführungsbeispiel der Erfindung in einen Buchenholzuntergrund gegenübergestellt sind. **Figur 8** zeigt die herkömmliche Holzschraube 800 (ohne konische Zwischengewindeabschnitte) und die Holzschraube 100 (mit konischen Zwischengewindeabschnitten 112 bzw. ausgebildet mit Schneckengewinde) gemäß einem exemplarischen Ausführungsbeispiel der Erfindung, die für die Experimente eingesetzt worden sind. Mit Ausnahme der verjüngten Abschnitte oder Zwischengewindeabschnitte 112 sind die Holzschrauben 800 bzw. 800' identisch (weisen aber eine unterschiedliche Länge auf).

Die Werte der Tabelle von Figur 7 sind indikativ für die Kraft, die zum vorbohrungsfreien Eindrehen der jeweiligen Schraube 100, 800 in den Buchenuntergrund erforderlich ist. Die Ergebnisse wurden bei einer Eindrehtiefe von 40 mm mit dem Prüfgerät Spider 8 (mit Drehmoment- und Winkelaufnehmer) unter Einsatz eines Akkuschraubers erhalten.

Figur 7 zeigt, dass die erfindungsgemäße Holzschraube 100 nur ein um ca. 3% und somit unerheblich erhöhtes Eindrehmoment gegenüber der herkömmlichen Holzschraube 800 zeigt.

**Figur 9** zeigt eine Tabelle 900, in der die Auszugskräfte der herkömmlichen Holzschraube 800 und der Holzschraube 100 gemäß dem exemplarischen Ausführungsbeispiel der Erfindung aus einem Fichtenholzuntergrund gegenübergestellt sind.

Für einen Fichtenholzuntergrund wurde somit gemessen, welche Kraft erforderlich ist, um die vorbohrungsfrei eingebrachte herkömmliche Holzschraube 800 und die vorbohrungsfrei eingebrachte erfindungsgemäße Holzschraube 100 aus dem Fichtenholzuntergrund herauszuziehen. Die Ergebnisse wurden bei einer Eindrehtiefe von 40 mm mit dem Prüfgerät Spider 8 (mit Kraftmessdose und Wegaufnehmer) unter Einsatz eines Hydraulikzylinders erhalten.

Die Messergebnisse zeigen, dass mit der erfindungsgemäßen Holzschraube 100 um mehr als 5% bessere Auszugswerte erreicht werden konnten als mit der herkömmlichen Holzschraube 800.

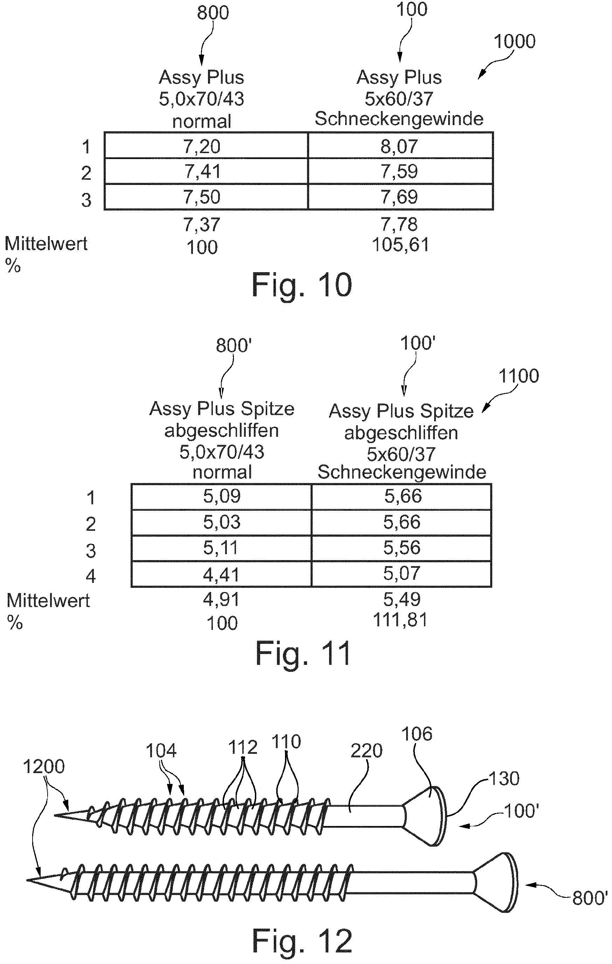

**Figur 10** zeigt eine Tabelle 1000, in der die Auszugskräfte der herkömmlichen Holzschraube 800 und der Holzschraube 100 gemäß dem exemplarischen Ausführungsbeispiel der Erfindung aus einem Buchenholzuntergrund gegenübergestellt sind.

Für einen Buchenholzuntergrund wurde somit gemessen, welche Kraft erforderlich ist, um die vorbohrungsfrei eingebrachte herkömmliche Holzschraube 800 und die vorbohrungsfrei eingebrachte erfindungsgemäße Holzschraube 100 aus dem Buchenholzuntergrund herauszuziehen. Die Ergebnisse wurden bei einer Eindrehtiefe von 40 mm mit dem Prüfgerät Spider 8 (mit Kraftmessdose und Wegaufnehmer) unter Einsatz eines Hydraulikzylinders erhalten.

Die Messergebnisse zeigen, dass mit der erfindungsgemäßen Holzschraube 100 um fast 6% bessere Auszugswerte erreicht werden konnten als mit der herkömmlichen Holzschraube 800.

**Figur 11** zeigt eine Tabelle 1100, in der die Auszugskräfte einer herkömmlichen Holzschraube 800' und einer Holzschraube 100' gemäß einem exemplarischen Ausführungsbeispiel der Erfindung aus einem vorgebohrten Fichtenholzuntergrund gegenübergestellt sind. Beide Schrauben 100', 800' wurden an der Schraubenspitze so abgeschliffen, dass diese eine ogivale Form erhalten haben. Mit einer solchen ogivalen Form können die Schrauben 100', 800' in einen Holzuntergrund vorbohrungsfrei eingenagelt bzw. eingeschossen werden. In dem gezeigten Experiment wurden jedoch die Holzuntergründe mit einem Spiralbohrer vorgebohrt, um eine Schraube ohne Bohrspitze zu simulieren. Der Durchmesser des Bohrers betrug ca. den halben Kerndurchmesser bei einer Einbohrtiefe von 15 mm. **Figur 12** zeigt die herkömmliche Holzschraube 800' und die Holzschraube 100' gemäß dem exemplarischen Ausführungsbeispiel der Erfindung, bei denen jeweils die Schraubenspitze 1200 abgeschliffen wurde.

Für einen Fichtenholzuntergrund wurde gemessen, welche Kraft erforderlich ist, um die eingebrachte herkömmliche Holzschraube 800' und die eingebrachte erfindungsgemäße Holzschraube 100' aus dem Fichtenholzuntergrund herauszuziehen. Die Ergebnisse wurden bei einer Eindrehtiefe von 40 mm mit dem Prüfgerät Spider 8 (mit Kraftmessdose und Wegaufnehmer) unter Einsatz eines Hydraulikzylinders erhalten.

Die Messergebnisse zeigen, dass mit der erfindungsgemäßen Holzschraube 100' um fast 12% bessere Auszugswerte erreicht werden konnten als mit der herkömmlichen Holzschraube 800'. Anschaulich kann beispielsweise eine erfindungsgemäße 5er-Schraube etwa die Verankerungscharakteristik einer 5,5er-Schraube erreichen.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Holzschraube (100) zum vorbohrungsfreien Einbringen in einen Holzuntergrund, insbesondere in einen massiven Holzuntergrund, wobei die Holzschraube (100) aufweist:
einen Schaftabschnitt (102) mit einem in Holz selbstschneidenden Gewinde (104);
einen an den Schaftabschnitt (102) rückseitig direkt oder indirekt angeschlossenen Schraubenkopf (106); und
eine an den Schaftabschnitt (102) vorderseitig direkt oder indirekt angeschlossene Schraubenspitze (108) zum vorbohrungsfreien Eindringen in den Holzuntergrund;
wobei an dem Schaftabschnitt (102) zwischen benachbarten Gewindegängen (110) sich in Richtung der Schraubenspitze (108) verjüngende Abschnitte (112) ausgebildet sind;
wobei an dem Schaftabschnitt (102) zwischen mehr als der Hälfte der benachbarten Gewindegänge (110) sich in Richtung der Schraubenspitze (108) verjüngende Abschnitte (112) ausgebildet sind;
wobei die sich verjüngenden Abschnitte (112) an dem Schaftabschnitt (102) eine Sägezahnstruktur bilden.

2. Holzschraube (100) gemäß Anspruch 1, wobei an dem Schaftabschnitt (102) zwischen benachbarten Gewindegängen (110) sich in Richtung der Schraubenspitze (108) konisch verjüngende Abschnitte (112) ausgebildet sind.

3. Holzschraube (100) gemäß Anspruch 1 oder 2, wobei an dem Schaftabschnitt (102) zwischen benachbarten Gewindegängen (110) sich in Richtung der Schraubenspitze (108) gegenüber einer Schraubenachse (114) gekrümmt, insbesondere zumindest abschnittsweise konkav und/oder konvex gekrümmt, verjüngende Abschnitte (112) ausgebildet sind.

4. Holzschraube (100) gemäß einem der Ansprüche 1 bis 3, wobei an dem Schaftabschnitt (102) zwischen mehr als 75 %, weiter bevorzugt zwischen mehr als 90 %, und höchst bevorzugt zwischen allen benachbarten Gewindegängen (110) sich in Richtung der Schraubenspitze (108) verjüngende Abschnitte (112) ausgebildet sind.

5. Holzschraube (100) gemäß einem der Ansprüche 1 bis 4, wobei die sich verjüngenden Abschnitte (112) gegenüber einer Schraubenachse (114) derart verschwenkt sind, dass ein sich an einen jeweils hinterseitigen Gewindegang (110h) anschließendes Zusatzmaterial (300) durch ein sich an den jeweils vorderseitigen Gewindegang (110v) anschließendes Fehlmaterial (302) ausgeglichen ist.

6. Holzschraube (100) gemäß einem der Ansprüche 1 bis 5, wobei die sich verjüngenden Abschnitte (112) gegenüber einer Schraubenachse (114) derart verschwenkt sind, dass der jeweilige sich verjüngende Abschnitt (112) einen massenäquivalenten Kreiszylinderkern in der Mitte (304) zwischen einem jeweiligen hinterseitigen Gewindegang (110h) und einem jeweiligen vorderseitigen Gewindegang (110v) schneidet.

7. Holzschraube (100) gemäß einem der Ansprüche 1 bis 6, wobei ein Verkippwinkel (β) von zumindest einem Teil der sich verjüngenden Abschnitte (112) gegenüber einer Schraubenachse (114) in einem Bereich zwischen 5° und 25°, insbesondere in einem Bereich zwischen 10° und 20°, liegt.

8. Holzschraube (100) gemäß einem der Ansprüche 1 bis 7, wobei ein Flankenwinkel (a) von zumindest einem Teil der Gewindegänge (110) in einem Bereich zwischen 30° und 70°, insbesondere in einem Bereich zwischen 40° und 60°, liegt.

9. Holzschraube (100) gemäß einem der Ansprüche 1 bis 8, aufweisend eines der folgenden Merkmale:
wobei die Schraubenspitze (108) als ein punktförmiges Ende (118) gebildet ist, wobei sich das Gewinde (104) ausgehend von dem punktförmigen Ende (118) entlang zumindest eines Teils des Schaftabschnitts (102) erstreckt;
wobei die Schraubenspitze (108) als Bohrspitze, insbesondere mit mindestens einer endseitigen Schneidkante (200), ausgebildet ist.

10. Holzschraube (100) gemäß einem der Ansprüche 1 bis 9, aufweisend zumindest eines der folgenden Merkmale:
wobei der Schraubenkopf (106) mit einem Antrieb (116) zum Drehantreiben der Holzschraube (100) versehen ist, wobei der Antrieb (116) insbesondere als Längsschlitz, als Kreuzschlitz, als Imbus, als TORX-Antrieb oder als AW-Antrieb ausgebildet ist;
wobei der Schaftabschnitt (102) einen zwischen dem Schraubenkopf (106) und dem Gewinde (104) angeordneten gewindefreien Abschnitt (220) aufweist, wobei derjenige der verjüngenden Abschnitte (112'), der im kleinsten Abstand zu dem Schraubenkopf (106) angeordnet ist, einen kontinuierlichen Übergang zwischen dem gewindefreien Abschnitt (220) und dem mit dem Gewinde (104) versehenen Abschnitt des Schaftabschnitts (102) bildet;
wobei an dem Schaftabschnitt (102) in einem gesamten axialen Bereich zwischen einem jeweiligen Paar von benachbarten Gewindegängen (110) sich in Richtung der Schraubenspitze (108) verjüngende Abschnitte (112) ausgebildet sind.

11. Verfahren zum Einbringen einer Holzschraube (100) in einen Holzuntergrund, wobei das Verfahren aufweist:
vorbohrungsfreies Ansetzen einer Schraubenspitze (108) an einem vorderseitigen Ende der Holzschraube (100) an den Holzuntergrund;
Antreiben der Holzschraube (100) mittels Betätigens eines Schraubenkopfs (106) an einem rückseitigen Ende der Holzschraube (100) zum Ausüben einer Setzkraft auf die Holzschraube (100) derart, dass die Schraubenspitze (108) vorbohrungsfrei in den Holzuntergrund eindringt und ein Gewinde (104) an einem Schaftabschnitt (102) der Holzschraube (100) zwischen Schraubenspitze (108) und Schraubenkopf (106) selbstschneidend ein Gegengewinde in dem Holzuntergrund schneidet, wobei an dem Schaftabschnitt (102) zwischen benachbarten Gewindegängen (110) sich in Richtung der Schraubenspitze (108) verjüngende Abschnitte (112) ausgebildet sind, die beim axialen Eindringen der Holzschraube (100) in den Holzuntergrund Holzmaterial radial verdrängen;
wobei an dem Schaftabschnitt (102) zwischen mehr als der Hälfte der benachbarten Gewindegänge (110) sich in Richtung der Schraubenspitze (108) verjüngende Abschnitte (112) ausgebildet sind;
wobei die sich verjüngenden Abschnitte (112) an dem Schaftabschnitt (102) eine Sägezahnstruktur bilden.

12. Verfahren gemäß Anspruch 11, aufweisend eines der folgenden Merkmale:
wobei die Holzschraube (100) mittels Drehbetätigens eines Antriebs (116) an dem Schraubenkopf (106) angetrieben wird;
wobei die Holzschraube (100) mittels Ausübens einer rein axialen Setzkraft auf den Schraubenkopf (106) angetrieben wird, insbesondere eingenagelt oder eingeschossen wird.

13. Verfahren zum Herstellen einer Holzschraube (100) zum vorbohrungsfreien Einbringen in einen Holzuntergrund, wobei das Verfahren aufweist:
Ausbilden eines Schaftabschnitts (102) der Holzschraube (100) mit einem in Holz selbstschneidenden Gewinde (104);
Ausbilden eines an den Schaftabschnitt (102) rückseitig direkt oder indirekt angeschlossenen Schraubenkopfs (106), insbesondere mit einem Antrieb (116);
Ausbilden einer an dem Schaftabschnitt (102) vorderseitig direkt oder indirekt angeschlossenen Schraubenspitze (108) zum vorbohrungsfreien Eindringen in den Holzuntergrund;
Ausbilden von sich in Richtung der Schraubenspitze (108) verjüngenden Abschnitten (112) zwischen benachbarten Gewindegängen (110) an dem Schaftabschnitt (102);
wobei an dem Schaftabschnitt (102) zwischen mehr als der Hälfte der benachbarten Gewindegänge (110) sich in Richtung der Schraubenspitze (108) verjüngende Abschnitte (112) ausgebildet werden;
wobei die sich verjüngenden Abschnitte (112) an dem Schaftabschnitt (102) eine Sägezahnstruktur bilden.

14. Verfahren gemäß Anspruch 13, aufweisend zumindest eines der folgenden Merkmale:
wobei die sich verjüngenden Abschnitte (112) zumindest teilweise beim Walzen des Gewindes (104) ausgebildet werden;
wobei die sich verjüngenden Abschnitte (112) zumindest teilweise beim Kneifen der Schraubenspitze (108) ausgebildet werden.

15. Verwendung einer Holzschraube (100) gemäß einem der Ansprüche 1 bis 10 zum insbesondere vorbohrungsfreien Einbringen in einen Holzuntergrund, insbesondere in einen Massivholzuntergrund.

## Claims

1. A wood screw (100) for introduction into a wooden substrate, in particular into a solid wooden substrate, with no pilot drilling, wherein
the wood screw (100) has:
a shank section (102) with a thread (104) that self-taps into wood;
a screw head (106) connected at its rear directly or indirectly to the shank section (102); and
a screw tip (108) connected at the front directly or indirectly to the shank section (102) for penetration into the wooden substrate with no pilot drilling; wherein
on the shank section (102), sections (112) tapering in the direction of the screw tip (108) are formed between adjacent threads (110); wherein
on the shank section (102) sections (112) tapering in the direction of the screw tip (108) are formed between more than half of the adjacent threads (110); wherein
the tapering sections (112) on the shank section (102) form a sawtooth structure.

2. The wood screw (100) in accordance with claim 1,
wherein
on the shank section (102) sections (112) conically tapering in the direction of the screw tip (108) are formed between adjacent threads (110).

3. The wood screw (100) in accordance with claim 1 or 2,
wherein
tapering sections (112) are formed on the shank section (102) between adjacent threads (110), curved in the direction of the screw tip (108) relative to a screw axis (114), in particular at least partially curved in a concave and/or convex manner.

4. The wood screw (100) in accordance with one of the claims 1 to 3, wherein
sections (112) tapering in the direction of the screw tip (108) are formed on the shank section (102) between more than 75%, more preferably between more than 90%, and most preferably between all adjacent threads (110).

5. The wood screw (100) in accordance with one of the claims 1 to 4, wherein
the tapering sections (112) are tilted relative to a screw axis (114) such that additional material (300) adjacent to a respective rear thread (110h) is compensated for by a lack of material (302) adjacent to the respective front thread (110v).

6. The wood screw (100) in accordance with one of the claims 1 to 5, wherein
the tapering sections (112) are tilted relative to a screw axis (114) such that the respective tapering section (112) cuts a mass-equivalent circular cylindrical core in the centre (304) between a respective rear thread (110h) and a respective front thread (110v).

7. The wood screw (100) in accordance with one of the claims 1 to 6, wherein
a tilt angle (β), of at least a part of the tapering sections (112), relative to a screw axis (114) lies in a range between 5° and 25°, in particular in a range between 10° and 20°.

8. The wood screw (100) in accordance with one of the claims 1 to 7, wherein
a flank angle (α) of at least a part of the threads (110) lies in a range between 30° and 70°, in particular in a range between 40° and 60°.

9. The wood screw (100) in accordance with one of the claims 1 to 8, having one of the following features:
wherein
the screw tip (108) is formed as a point-form end (118), wherein
the thread (104), starting from the point-form end (118), extends along at least a section of the shank section (102); wherein
the screw tip (108) is designed as a drill tip, in particular with at least one end face cutting edge (200) .

10. The wood screw (100) in accordance with one of the claims 1 to 9, having at least one of the following features: wherein
the screw head (106) is provided with a drive (116) for purposes of driving the wood screw (100) in a rotary manner, wherein
the drive (116) is designed, in particular, as a longitudinal slot, as a cross slot, as an Allen key drive, as a Torx drive, or as an AW drive; wherein the shank section (102) has a non-threaded section (220) arranged between the screw head (106) and the thread (104), wherein
the particular tapering section (112') that is arranged at the smallest distance from the screw head (106) forms a continuous transition between the non-threaded section (220) and the section of the shank section (102) that is provided with the thread (104); wherein
on the shank section (102), tapering sections (112) are formed over an entire axial region between a respective pair of adjacent threads (110) in the direction of the screw tip (108).

11. A method for introducing a wood screw (100) into a wooden substrate, wherein
the method has:
positioning of a screw tip (108) at a front end of the wood screw (100) onto the wooden substrate with no pilot drilling;
driving of the wood screw (100) by actuating a screw head (106) at a rear end of the wood screw (100) so as to apply a setting force onto the wood screw (100), such that the screw tip (108) penetrates the wooden substrate with no pilot drilling, and a thread (104) on a shank section (102) of the wood screw (100) between the screw tip (108) and the screw head (106) cuts a mating thread in the wooden substrate in a self-tapping manner,
tapering sections (112) are formed on the shank section (102) between adjacent threads (110) in the direction of the screw tip (108); these displace wood material radially as the wood screw (100) penetrates axially into the wooden substrate; wherein
tapering sections (112) are formed on the shank section (102) in the direction of the screw tip (108) between more than half of the adjacent threads (110); wherein
the tapering sections (112) on the shank section (102) form a sawtooth structure.

12. The method in accordance with claim 11, having one of the following features: wherein
the wood screw (100) is driven by the rotary actuation of a drive (116) on the screw head (106); wherein
the wood screw (100) is driven by the exertion of a purely axial setting force onto the screw head (106), in particular it is nailed in or injected in.

13. A method for producing a wood screw (100) for introduction into a wooden substrate with no pilot drilling, wherein
the method has:
formation of a shank section (102) of the wood screw (100) with a thread (104) that self-taps into wood;
formation of a screw head (106), in particular with a drive (116), connected at its rear directly or indirectly to the shank section (102);
formation of a screw tip (108) connected at the front directly or indirectly to the shank section (102) for the purpose of penetration into the wooden substrate with no pilot drilling;
formation of sections (112) tapering in the direction of the screw tip (108) between adjacent threads (110) on the shank section (102); wherein
tapering sections (112) are formed on the shank section (102) in the direction of the screw tip (108) between more than half of the adjacent threads (110); wherein
the tapering sections (112) on the shank section (102) form a sawtooth structure.

14. The method in accordance with claim 13, having at least one of the following features: wherein
the tapering sections (112) are formed at least partially during the rolling of the thread (104); wherein
the tapering sections (112) are at least partially formed during the pinching of the screw tip (108).

15. A use of a wood screw (100) in accordance with one of the claims 1 to 10,
for introduction into a wooden substrate, in particular into a solid wooden substrate, in particular with no pilot drilling.

## Revendications

1. Vis à bois (100), destinée à être introduite sans perçage préalable dans un support en bois, notamment dans un support en bois massif, la vis à bois (100) comportant :
un tronçon de tige (102) doté d'un filetage autotaraudeur (104) dans le bois ;
une tête de vis (106) directement ou indirectement raccordée sur l'arrière sur le tronçon de tige (102) ; et
une pointe de vis (108) raccordée directement ou indirectement sur l'avant sur le tronçon de tige (102), destinée à être introduite sans perçage dans le support en bois ;
sur le tronçon de tige (102), entre des pas de filetage (110) voisins étant conçus des tronçons qui se rétrécissent (112) dans la direction de la pointe de vis (108) ;
sur le tronçon de tige (102), entre plus de la moitié des pas de filetage (110) voisins étant conçus des tronçons qui se rétrécissent (112) dans la direction de la pointe de vis (108) ;
les tronçons qui se rétrécissent (112) formant sur le tronçon de tige (102) une structure en dents de scie.

2. Vis à bois (100) selon la revendication 1, sur le tronçon de tige (102), entre des pas de filetage (110) voisins étant conçus des tronçons qui se rétrécissent (112) sous forme conique dans la direction de la pointe de vis (108).

3. Vis à bois (100) selon la revendication 1 ou 2, sur le tronçon de tige (102), entre des pas de filetage (110) voisins étant conçus des tronçons qui se rétrécissent (112) dans la direction de la pointe de vis (108) de manière recourbée, notamment recourbée par parties sous forme concave et/ou convexe par rapport à un axe de la vis (114).

4. Vis à bois (100) selon l'une quelconque des revendications 1 à 3, sur le tronçon de tige (102), entre plus de 75 %, de manière plus préférentielle entre plus de 90 %, et de manière la plus préférentielle, entre tous les pas de filetage (110) voisins étant conçus des tronçons qui se rétrécissent (112) dans la direction de la pointe de vis (108).

5. Vis à bois (100) selon l'une quelconque des revendications 1 à 4, les tronçons qui se rétrécissent (112) étant pivotés par rapport à un axe de la vis (114), de telle sorte qu'une matière additionnelle (300) se raccordant sur un pas de filetage (110h) respectivement postérieur soit compensée par une matière manquante (302) se raccordant sur le pas de filetage (110v) respectivement antérieur.

6. Vis à bois (100) selon l'une quelconque des revendications 1 à 5, les tronçons qui se rétrécissent (112) étant pivotés par rapport à un axe de la vis (114), de telle sorte que le tronçon qui se rétrécit 112) respectif recoupe dans le milieu (304), entre des pas de filetage (110h) respectivement postérieurs et des pas de filetage (110v) respectivement antérieurs un noyau de cylindre circulaire à masse équivalente.

7. Vis à bois (100) selon l'une quelconque des revendications 1 à 6, un angle de basculement (β) d'au moins une partie des tronçons qui se rétrécissent (112) se situant au vis-à-vis d'un axe de la vis (114) dans un ordre compris entre 5° et 25°, notamment dans un ordre compris entre 10° et 20°.

8. Vis à bois (100) selon l'une quelconque des revendications 1 à 7, un angle du flanc (a) d'au moins une partie du pas de filetage (110) se situant dans un ordre compris entre 30° et 70°, notamment dans un ordre compris entre 40° et 60°.

9. Vis à bois (100) selon l'une quelconque des revendications 1 à 8, présentant l'une des caractéristiques suivantes :
la pointe de vis (108) étant conçue sous la forme d'une extrémité ponctuelle (118), en partant de l'extrémité ponctuelle (118), le filetage (104) s'étendant le long d'au moins une partie du tronçon de tige (102) ;
la pointe de vis (108) étant conçue sous la forme d'une pointe taraudeuse, notamment avec au moins une arête coupante (200), côté extrémité.

10. Vis à bois (100) selon l'une quelconque des revendications 1 à 9, présentant au moins l'une des caractéristiques suivantes :
la tête de vis (106) étant munie d'un entraînement (116), destiné à entraîner en rotation la vis à bois (100), l'entraînement (116) étant conçu notamment sous la forme d'une encoche longitudinale, d'une encoche cruciforme, d'un six pans creux ou d'un entraînement TORX ou d'un entraînement AW ;
le tronçon de tige (102) comportant un tronçon non fileté (220) placé entre la tête de vis (106) et le filetage (104), celui des tronçons qui se rétrécissent (112') qui est placé avec le plus petit écart par rapport à la tête de vis (106) formant une transition continue entre le tronçon sans filetage (220) et le tronçon du tronçon de tige (102) muni du filetage (104) ;
sur le tronçon de tige (102), dans une région axiale globale entre une paire respective de pas de filetage (110) voisins étant conçus des tronçons qui se rétrécissent (112) dans la direction de la pointe de vis (108) .

11. Procédé, destiné à introduire une vis à bois (100) dans un support en bois, le procédé comportant :
la mise en prise sans perçage préalable d'une pointe de vis (108) sur une extrémité antérieure de la vis à bois (100) sur le support en bois ;
l'entraînement de la vis à bois (100) au moyen d'une manoeuvre d'une tête de vis (106) sur une extrémité postérieure de la vis à bois (100), pour l'exercice d'une force de placement sur la vis à bois (100), de telle sorte que la pointe de vis (108) pénètre sans perçage préalable dans le support en bois et qu'un filetage (104) sur un tronçon de tige (102) de la vis à bois (100), entre la pointe de vis (108) et la tête de vis (106) coupe par autotaraudage un taraudage antagoniste dans le support en bois, sur le tronçon de tige (102), entre des pas de filetage (110) voisins étant conçus des tronçons qui se rétrécissent (112) dans la direction de la pointe de vis (108), qui lors de la pénétration axiale de la vis à bois (100) dans le support en bois refoulent en direction radiale de la matière du bois ;
sur le tronçon de tige (102), entre plus de la moitié des pas de filetage (110) voisins, étant conçus des tronçons qui se rétrécissent (112) dans la direction de la pointe de vis (108) ;
les tronçons qui se rétrécissent (112) formant sur le tronçon de tige (102) une structure en dents de scie.

12. Procédé selon la revendication 11, présentant l'une des caractéristiques suivantes :
la vis à bois (100) étant entraînée au moyen d'une manoeuvre en rotation d'un entraînement (116) sur la tête de vis (106) ;
la vis à bois (100) étant entraînée, notamment clouée ou projetée au moyen de l'exercice d'une force de placement purement axiale sur la tête de vis (106).

13. Procédé, destiné à fabriquer une vis à bois (100), pour l'introduction sans perçage préalable dans un support en bois, le procédé comportant :
la création d'un tronçon de tige (102) de la vis à bois (100) avec un filetage autotaraudeur (104) dans le bois ;
la création d'une tête de vis (106), raccordée directement ou indirectement sur l'arrière du tronçon de tige (102), notamment dotée d'un entraînement (116) ;
la création d'une pointe de vis (108), raccordée directement ou indirectement sur l'avant du tronçon de tige (102), destinée à pénétrer sans perçage préalable dans le support en bois ;
la création de tronçons qui se rétrécissent (112) dans la direction de la pointe de vis (108) entre des pas de filetage (110) voisins sur le tronçon de tige (102) ;
sachant que sur le tronçon de tige (102), entre plus de la moitié des pas de filetage (110) voisins, on réalise des tronçons qui se rétrécissent (112) dans la direction de la pointe de vis ;
les tronçons qui se rétrécissent (112) formant sur le tronçon de tige (102) une structure en dents de scie.

14. Procédé selon la revendication 13, présentant au moins l'une des caractéristiques suivantes :
les tronçons qui se rétrécissent (112) étant réalisés au moins en partie lors du laminage du filetage (104) ;
les tronçons qui se rétrécissent (112) étant réalisés au moins en partie lors du pincement de la pointe de vis (108).

15. Utilisation d'une vis à bois (100) selon l'une quelconque des revendications 1 à 10, pour l'introduction notamment sans perçage préalable dans un support en bois, notamment dans un support en bois massif.
